# EUROPÄISCHE PATENTSCHRIFT

(11) **EP 0 825 585 B1**
(45) Veröffentlichungstag und Bekanntmachung des Hinweises auf die Patenterteilung: **20.07.2005**
(21) Anmeldenummer: 97111808.8
(22) Anmeldetag: 11.07.1997
(51) Int. Cl.: G10K 9/12, B06B 1/02, G01S 15/93

(54) **Vorrichtung zur Bestimmung des Abstandes von Objekten**
Apparatus for determination of distances to objects
Dispositif pour la détermination de distances à objets

(30) Priorität: 21.08.1996 DE 19633566
(43) Veröffentlichungstag der Anmeldung: 25.02.1998
(73) Patentinhaber: Volkswagen Aktiengesellschaft, 38436 Wolfsburg (DE)
(72) Erfinder: Lissel, Ernst, Dipl.-Ing., 38442 Wolfsburg (DE); Bahr, Ulrich, Dipl.-Ing. Dr., 38118 Braunschweig (DE)

(56) Entgegenhaltungen:
- EP-A- 0 231 596
- DE-A- 4 410 895
- US-A- 4 034 332
- US-A- 5 395 592

## Beschreibung

Die Erfindung betrifft eine Vorrichtung zur Bestimmung des Abstandes von Objekten mit einer Anzahl von elektrostatischen Ultraschallwandlern gemäß dem Oberbegriff des Patentanspruchs 1.

Aus der deutschen Offenlegungsschrift DE 31 37 745 A1 ist ein Sensor für die Durchführung der Distanzmessung nach dem Ultraschall-Echoprinzip, insbesondere zur Ermittlung und Anzeige der Annäherungsabstände zwischen Fahrzeugen und Hindernissen im Nahbereich mit einem Ultraschallsender- und Empfängerwandler zur Ausstrahlung der Ultraschallsignale zum Empfang der vom Hindernis reflektierten Ultraschallsignale bekannt. Der Wandler besteht aus einem Topfwandler mit darin angeordneten piezokeramischen Schwingern.

Weiterhin ist in der deutschen Offenlegungsschrift DE 42 01 806 A1 eine Rückwärts-Fahrhilfe für Automobile beschrieben, welche die Entfernung zwischen dem Fahrzeug und einem hinter diesem liegenden Hindernis mittels Ultraschallwellen mißt. Die notwendigen Ultraschallgeber, welche die Ultraschallimpulse aussenden, und die elektroakustischen Wandler, welche die vom Hindernis reflektierten Ultraschallwellen empfangen, sind in Platten aus biegsamen Kunststoff eingelassen. An der hinteren Stoßstange des Fahrzeuges ist links und rechts je eine dieser Platten angebracht. Es wird außerdem erwähnt, daß piezoelektrische, magnetostrektive oder andere Ultraschallgeber zur Anwendung kommen können.

Des weiteren ist aus der deutschen Offenlegungsschrift DE 44 10 895 A1 bekannt, Ultraschallsensoren in einer entsprechenden Bohrung einer Stoßstange des Kraftfahrzeuges unterzubringen und so auszurichten, daß Straßenreflektionen nicht stören. Der Ultraschallsensor wird danach mit einer der Kontur des Kraftfahrzeugaußenteils angepaßten Abdeckung versehen, die auch das gesamte Fahrzeugteil überziehen kann. Als Beispiel ist eine robuste Kunststoff-Folie angegeben.

Die beschriebenen Lösungen haben den Nachteil, daß aufgrund der geringen Anzahl von Sensoreinrichtungen eine lückenlose Überwachung der Umgebung entweder nicht möglich ist, oder mechanische Schwenkeinrichtungen zur Überwachung des gesamten Umgebungsbereichs notwendig sind.

Zur Vermeidung des Nachteils ist in der deutschen Patentschrift DE 44 25 419 C1 eine Ultraschall-Warnanlage für Fahrzeuge beschrieben, die eine rückseitige Sender- und Empfangsanordnung, die vier aus diskret angeordneten in einer heckseitigen Stoßstange des Fahrzeuges integrierten Sender- und Empfängereinheiten besteht, sowie eine frontseitige Sender- und Empfängeranordnung, die aus weiteren sechs ebenfalls diskret angeordneten, in eine frontseitige Stoßstange integrierten Sender- und Empfängereinheiten besteht, von denen vier frontal nach vorn und die beiden übrigen den vorderen rechten bzw. den vorderen linken Eckbereich überwachend angeordnet sind, beinhaltet. Eine solche hohe Anzahl von Sensoren bedingt jedoch einen hohen Montage- und Kostenaufwand.

Aus der EP 0 231 596 B1 ist ein atmosphärischer Ultraschallwandler mit einer ersten und einer zweiten Elektrode bekannt. Die beiden Elektroden sind als Array unterteilter Elektroden derart ausgebildet, daß die unterteilten Elektroden der jeweiligen Arrays gegenüberliegen, um ein elektrisches Übergreifen zu reduzieren.

In der US 4,885,783 ist ein Messfühler beschrieben, der zwei gegenüberliegende leitfähige Platten zum Erzeugen einer elektrischen Potentialdifferenz zwischen den Platten aufweist. Zwischen den Platten ist ein dehnbares dielektrisches Material angeordnet. Aufgrund der unebenen Oberfläche des dielektrischen Materials, sind Einschlüsse (Luftspalte) zwischen dem dielektrischen Material und dem diesen gegenüberliegenden leitfähigen Platten vorhanden. Diese Zwischenräume können mit einem Gas gefüllt sein.

Aus der US 5,395,592 ist ein Wandler bekannt, der eine Flüssigkeit zu akustischen Vibrationen anregt. Der aus mehreren Schichten aufgebaute Wandler ist an der Gehäuseinnenseite eines zylindrischen, flüssigkeitsgefüllten Behälters angeordnet.

In der US 4,034,332 ist ein Ultraschallwandler zum Aussenden von Ultraschallwellen in ein flüssiges oder festes Medium beschrieben, der vergleichbar wie ein Kondensator aufgebaut ist.

Es ist die Aufgabe der Erfindung, eine Vorrichtung zur Bestimmung des Abstandes von Objekten zu schaffen, die einen zu erfassenden Umgebungsbereich vollständig überwacht und deren Montage einfach und mit geringen Kosten möglich ist.

Die Aufgabe wird durch die Merkmale des Patentanspruchs 1 gelöst. Vorteilhafte Aus- und Weiterbildungen sind in den Unteransprüchen dargestellt. Gemäß der Erfindung weist die Vorrichtung zur Bestimmung des Abstandes eine Anzahl von elektrostatischen Ultraschallwandlern auf, die die Verwendung eines großen Frequenzspektrums erlauben. Dabei werden die Ultraschallwandler aus übereinanderliegenden Schichten gebildet. Die festen Elektroden der Ultraschallwandler und die mit diesen verbundenen Leiterbahnen sind aus einer ersten strukturierten Metallschicht gebildet, die beispielsweise durch ein Ätz- oder Siebdruckverfahren hergestellt werden kann. Daran schließt sich eine Isolierschicht und eine zweite auf der Isolierschicht angeordnete ganzflächige Metallschicht zur Bildung der Gegenelektroden für die durch die erste Metallschicht gebildeten Elektroden der Ultraschallwandler an. Die Isolierschicht weist im Bereich der durch die erste Metallschicht gebildeten Elektroden der Ultraschallwandler Durchbrüche zur Bildung von Luftpolstern für die Auslenkung der zweiten ganzflächigen Metallschicht auf.

Eine Ausbildung der Erfindung sieht vor, daß die Isolierschicht eine Isolier-Folie ist, welche auf der strukturierten ersten Metallschicht angeordnet ist.

Nach einer anderen Ausbildung der Erfindung kann vorgesehen sein, daß die Isolier-Folie auf ihrer den Elektroden abgewandten Seite ganzflächig metallisiert ist und so die zweite Metallschicht gebildet wird.

Eine weitere Möglichkeit besteht darin, die zweite Metallschicht auf einer weiteren Kunststoff-Folie aufzubringen, die gleichzeitig als Schutzschicht für die Ultraschallwandler vor Schmutz und mechanischen Beschädigungen Anwendung finden kann. Die übereinanderliegenden Schichten sind vorteilhafterweise flexibel ausgebildet und weisen eine maximale Dicke von ca. 1/10 mm auf, so daß sie jegliche Designfreiheit gestatten.

Bei der Verwendung der erfindungsgemäßen Vorrichtung in einem Kraftfahrzeug werden die mehrere Ultraschallwandler gleichzeitig bildenden Schichten vorzugsweise auf den Stoßfängern oder Zierleisten des Kraftfahrzeuges aufgebracht.

Mit Hilfe des so ausgebildeten Sandwicharrays lassen sich auf einfache Weise eine große Anzahl von Ultraschallwandlern gleichzeitig herstellen und beispielsweise auf einem äußeren Teil des Kraftfahrzeuges kostengünstig aufbringen. Gleichzeitig reduziert sich durch die Bildung der Leiterbahnen auf der ersten Metallschicht der Verdrahtungsaufwand der Ultraschallwandler erheblich.

Nachfolgend wird die Erfindung anhand eines Ausführungsbeispiels näher beschrieben. Die zugehörigen Zeichnungen zeigen:
- Figur 1: den schematischen Aufbau eines elektrostatischen Ultraschallwandlers,
- Figur 2: den schematischen Aufbau eines Sellwandlers,
- Figur 3: einen Schichtaufbau mit einer beliebigen Anzahl von Ultraschallwandlern,
- Figur 4: einen lateralen Aufbau der ersten Metallschicht und
- Figur 5: eine Anordnung von Ultraschallwandlern an einem Kraftfahrzeug.

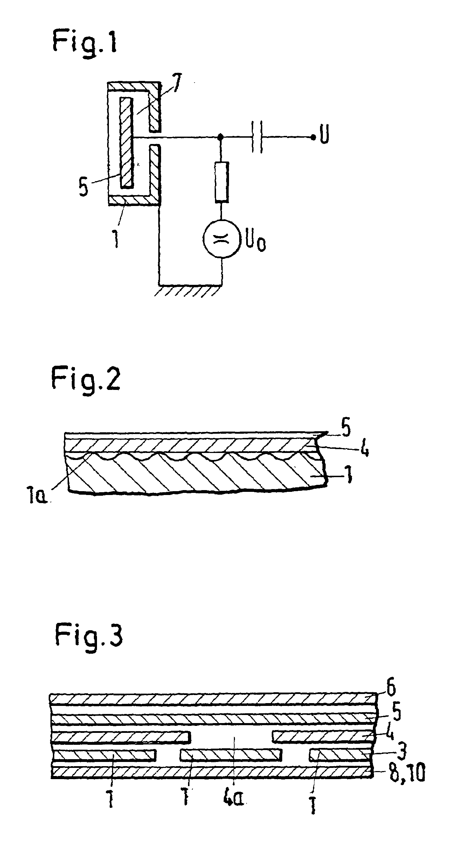

In Figur 1 ist der Aufbau eines elektrostatischen Ultraschallwandlers näher dargestellt. Diese Ultraschallwandler sind aufgebaut wie ein Plattenkondensator. Eine dünne leitfähige Membran (Gegenelektrode) 5 ist gegenüber einer massiven Elektrode 1 angebracht. Zwischen der Membran 5 und der Elektrode 1 wird durch Anlegen einer Spannung U eine elektrostatische Kraft erzeugt, durch welche die Elektroden 1, 5 gleichzeitig angezogen werden. Da die Elektrode 1 massiv ist, wird die flexible Membran 5 durch die Wechselspannung U zu Schwingungen angeregt, wodurch sie in der sie umgebenden Luft Schallwellen erzeugt bzw. abstrahlt. Da die elektrostatische Kraft auf die Membran 5 proportional zum Quadrat der angelegten Spannung U ansteigt, wird der Arbeitspunkt auf der quadratischen Kennlinie verlagert, indem man eine hohe Gleichspannung U₀ der angelegten Wechselspannung U überlagert. Durch die Überlagerung der im Vergleich zur Wechselspannung hohen Gleichspannung U₀ wird ein linearer Betrieb des Ultraschallwandlers erreicht. Die erzeugte Kraft und damit der Schalldruck sind somit proportional zur angelegten Wechselspannung U. Zudem ist der Schalldruck durch die höhere Gesamtspannung höher als beim alleinigen Anlegen der Wechselspannung.

Die Bewegung der Membran 5 wird nicht nur durch die Masse und ihre Nachgiebigkeit, sondern wesentlich durch das Luftpolster im engen Spalt 7 zwischen ihr und der Elektrode 1 beeinflußt. Verringert sich die Dicke des Luftpolsters durch eine Auslenkung der Membran 5, so entsteht ein Überdruck, und die Luft strömt aus dem Spalt 7. Andererseits entsteht bei einer Abstandsvergrößerung der Elektroden 1, 5 eine Druckabnahme, Luft wird in den Spalt 7 gesaugt.

Wird als Membran 5 eine einseitig metallisierte Kunststoff-Folie 4, 5 verwendet, welche direkt auf der massiven Elektrode 1 aufliegt, so entsteht ein sogenannter Sellwandler, wie er in Figur 2 gezeigt ist. Da die Elektrode 1 niemals ganz glatt ist, liegt die Membran 4, 5 auf winzigen Erhebung 1a auf. Dazwischen bleibt immer ein dünnes und nachgiebiges Luftpolster, in dem die Membran 4, 5 schwingen kann. Die Oberflächenbeschaffenheit der Elektrode 1 ist maßgeblich für die Grenzfrequenz und die Empfindlichkeit des Ultraschallwandlers verantwortlich. Bei glatten hochglanzpolierten Elektroden 1 erstreckt sich der Frequenzbereich bei relativ geringer Empfindlichkeit bis etwa 500 kHz. Aufgerauhte oder mit Rillen versehene Elektroden 1 zeigen geringere Grenzfrequenzen bei höheren Empfindlichkeiten. Als Elektrode 1 kann sogar ein feinmaschiges Drahtgewebe verwendet werden, so daß die Form des Ultraschallwandlers fast beliebig gestaltet werden kann.

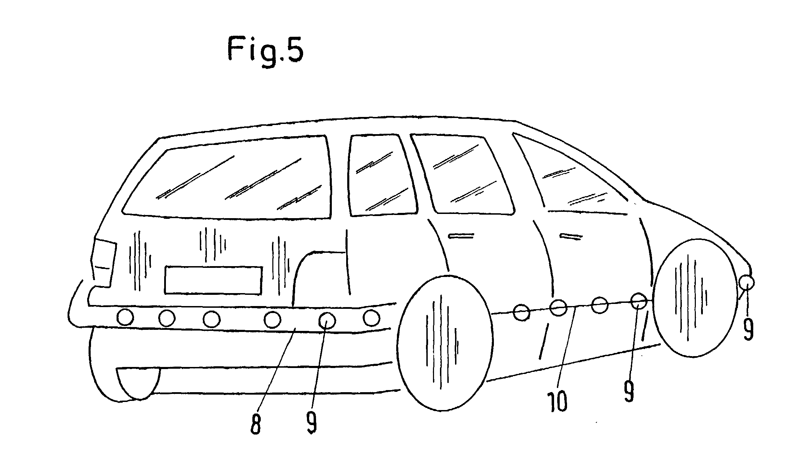

Für die Ermittlung von Objekten und ihres Abstandes, beispielsweise im rückwärtigen oder seitlichen Bereich eines Kraftfahrzeuges wird eine größere Anzahl von Ultraschallwandlern 9 benötigt, die wie in Figur 5 gezeigt, an den Stoßfängern 8 oder den Zierleisten 10 des Kraftfahrzeuges angeordnet sind. Das Anbringen von diskreten Ultraschallwandlern erfordert einen hohen Montage- und Verdrahtungsaufwand und ist aus Sicht des Designs oft nur unbefriedigend.

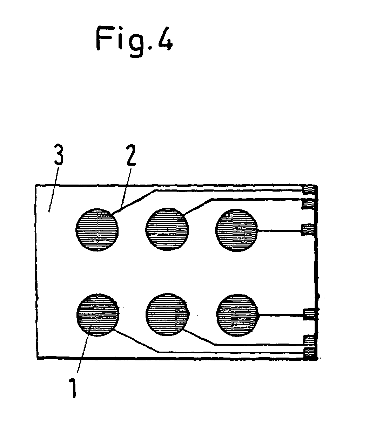

Figur 3 zeigt eine Möglichkeit, eine größere Anzahl von Ultraschallwandlern durch übereinanderliegende Schichten 3, 4, 5 gleichzeitig herzustellen, die auf Teilen 8, 10 des Kraftfahrzeuges, beispielsweise durch Aufkleben, aufgebracht werden. Die unterste erste Metallschicht 3 ist derart strukturiert, daß die Elektroden 1, der Ultraschallwandler und die mit diesen verbundenen Leiterbahnen 2 gebildet werden. Einen möglichen lateralen Aufbau dieser ersten Metallschicht 3 zeigt Figur 4. Die erste Metallschicht 3 kann dabei auf einer nicht dargestellten Kunststoff-Folie, welche auf dem Teil 8, 10 aufgeklebt ist, aufgebracht sein.

Über der ersten Metallschicht 3 liegt eine Isolierschicht 4, welche die erste Metallschicht 3 von der zweiten ganzflächigen Metallschicht 5 elektrisch trennt. Die Isolierschicht 4 kann dabei aus einer eigenständigen Isolier-Folie gebildet sein, die zur Bildung der Luftpolster zwischen den Elektroden 1, 5 der Ultraschallwandler Durchbrüche im Bereich der Elektroden 1 aufweist. Wenn die Isolierschicht 4 als eigenständige Kunststoff-Folie ausgebildet ist, wird die zweite Metallschicht 5, welche die Gegenelektroden 5 zu den Elektroden 1 der ersten Metallschicht 3 bildet, auf einer Folie 6 aufgebracht, welche beispielsweise als Schutzschicht für die Ultraschallwandler dient.

Eine andere Möglichkeit besteht darin, daß die Isolier-Folie 4 auf ihrer der ersten Metallschicht 3 abgewandten Seite metallisiert ist und so die zweite Metallschicht 5 gebildet wird. In diesem Fall bilden die Isolier-Folie 4 und die Metallschicht 5 die schwingende Membran. Die notwendigen Luftpolster werden dann über die Oberfläche der Elektroden 1 gebildet.

## Patentansprüche

1. Vorrichtung zur Bestimmung des Abstandes von Objekten mit einer Anzahl von elektrostatischen Ultraschallwandlern (9), die durch übereinander liegende Schichten (3, 4, 5) gebildet sind, wobei auf einer ersten Metallschicht (3) eine Isolierschicht (4) und auf dieser eine ganzflächige Metallschicht (5) aufgebracht ist, wobei die erste Metallschicht (3) derart strukturiert ist, dass die Anzahl von Elektroden (1), die der Anzahl der Ultraschallwandler (9) entspricht, und mit den Elektroden (1) verbundene Leiterbahnen (2) gebildet sind und die Metallschicht (5) schwingungsfähige Gegenelektroden für die durch die erste Metallschicht (3) erzeugten Elektroden (1) bildet, **dadurch gekennzeichnet, dass** die Isolierschicht (4) im Bereich der durch die erste Metallschicht (3) gebildeten Elektroden (1) der Ultraschallwandler (9) Durchbrüche (4a) zur Bildung von Luftpolstern für die Auslenkung der Ganzflächigen Metallschicht (5) aufweist.

2. Vorrichtung nach Anspruch 1, **dadurch gekennzeichnet, dass** die erste Metallschicht (3) auf einer Folie aufgebracht ist.

3. Vorrichtung nach Anspruch 1 oder 2, **dadurch gekennzeichnet, dass** die Isolierschicht (4) eine Isolier-Folie ist.

4. Vorrichtung nach einem der Ansprüche 1 bis 3, **dadurch gekennzeichnet, dass** die zweite Metallschicht (5) auf einer Folie (6) aufgebracht ist.

5. Vorrichtung nach Anspruch 4, **dadurch gekennzeichnet, dass** die Folie (6) eine Schutzschicht für die Ultraschallwandler (9) bildet.

6. Vorrichtung nach einem der Ansprüche 1 bis 5, **dadurch gekennzeichnet, dass** die übereinander liegenden Schichten (3, 4, 5) flexibel ausgebildet sind.

7. Vorrichtung nach einem der Ansprüche 1 bis 6, **dadurch gekennzeichnet, dass** die übereinander liegenden Schichten (3, 4, 5) eine maximale Dicke von ca. 1/10 mm aufweisen.

8. Vorrichtung nach einem der Ansprüche 1 bis 7, **dadurch gekennzeichnet, dass** die strukturierte Metallschicht (3) durch ein Siebdruckverfahren gebildet wird.

9. Vorrichtung nach einem der Ansprüche 1 bis 7, **dadurch gekennzeichnet, dass** die strukturierte Metallschicht (3) durch ein Ätzverfahren gebildet wird.

10. Vorrichtung nach einem der Ansprüche 1 bis 9, **dadurch gekennzeichnet, dass** die übereinander liegenden Schichten (3, 4, 5) auf einem äußeren Teil (8, 10) eines Kraftfahrzeuges befestigt sind.

11. Vorrichtung nach einem der Ansprüche 1 bis 10, **dadurch gekennzeichnet, dass** die erste Metallschicht (3) direkt auf dem äußeren Teil (8, 10) des Kraftfahrzeuges aufgebracht ist.

12. Vorrichtung nach einem der Ansprüche 1 bis 11, **dadurch gekennzeichnet, dass** das die übereinander liegenden Schichten (3, 4, 5) tragende Teil des Kraftfahrzeuges ein Stoßfänger (8) ist.

13. Vorrichtung nach einem der Ansprüche 1 bis 11, **dadurch gekennzeichnet, dass** das die übereinander liegenden Schichten (3, 4, 5) tragende Teil eine Zierleiste (10) des Kraftfahrzeuges ist.

## Claims

1. Device for determining the distance of objects with a number of electrostatic ultrasonic transducers (9) which are formed by superposed layers (3, 4, 5), an insulation layer (4) being applied on a first metal layer (3), and a full-surface metal layer (5) being applied on said insulation layer, the first metal layer (3) being structured in such a way as to form the number of electrodes (1), corresponding to the number of ultrasonic transducers (9), and to form conductor tracks (2) connected to the electrodes (1), and the metal layer (5) forming oscillating counterelectrodes for the electrodes (1) produced by the first metal layer (3), **characterized in that**, in the region of the electrodes (1) formed by the first metal layer (3), of the ultrasonic transducers (9), the insulation layer (4) has cutouts (4a) for forming air cushions for deflecting the full-surface metal layer (5).

2. Device according to Claim 1, **characterized in that** the first metal layer (3) is applied on a sheet.

3. Device according to Claim 1 or 2, **characterized in that** the insulation layer (4) is an insulation sheet.

4. Device according to one of Claims 1 to 3, **characterized in that** the second metal layer (5) is applied on a sheet (6).

5. Device according to Claim 4, **characterized in that** the sheet (6) forms a protective layer for the ultrasonic transducers (9).

6. Device according to one of Claims 1 to 5, **characterized in that** the superposed layers (3, 4, 5) are designed to be flexible.

7. Device according to one of Claims 1 to 6, **characterized in that** the superposed layers (3, 4, 5) have a maximum thickness of about 1/10 mm.

8. Device according to one of Claims 1 to 7, **characterized in that** the structured metal layer (3) is formed by a screenprinting method.

9. Device according to one of Claims 1 to 7, **characterized in that** the structured metal layer (3) is formed by an etching method.

10. Device according to one of Claims 1 to 9, **characterized in that** the superposed layers (3, 4, 5) are fastened on an outer part (8, 10) of a motor vehicle.

11. Device according to one of Claims 1 to 10, **characterized in that** the first metal layer (3) is applied directly on the outer part (8, 10) of the motor vehicle.

12. Device according to one of Claims 1 to 11, **characterized in that** the motor vehicle part bearing the superposed layers (3, 4, 5) is a bumper (8).

13. Device according to one of Claims 1 to 11, **characterized in that** the part bearing the superposed layers (3, 4, 5) is a trim strip (10) of the motor vehicle.

## Revendications

1. Dispositif pour la détermination de la distance à des objets avec un certain nombre de transducteurs électrostatiques d'ultrasons (9) constitués de couches superposées (3, 4, 5), une couche isolante (4) étant déposée sur une première couche métallique (3) et une couche métallique (5) de surface pleine étant déposée sur cette couche isolante (4), la première couche métallique (3) étant structurée de manière à former un nombre d'électrodes (1) correspondant au nombre de transducteurs électrostatiques d'ultrasons (9) et à former des pistes conductrices (2) reliées aux électrodes (1), et que la couche métallique (5) forme des contre-électrodes pouvant osciller, pour les électrodes (1) produites par la première couche métallique (3), **caractérisé en ce que**, dans la zone des électrodes (1) des transducteurs électrostatiques d'ultrasons (9) formées par la première couche métallique (3), la couche isolante (4) présente des percements (4a) pour former des coussins d'air pour le débattement de la couche métallique (5) de surface pleine.

2. Dispositif selon la revendication 1, **caractérisé en ce que** la première couche métallique (3) est déposée sur une feuille.

3. Dispositif selon la revendication 1 ou 2, **caractérisé en ce que** la couche isolante (4) est une feuille isolante.

4. Dispositif selon une des revendications 1 à 3, **caractérisé en ce que** la deuxième couche métallique (5) est déposée sur une feuille (6).

5. Dispositif selon la revendication 4, **caractérisé en ce que** la feuille (6) forme une couche de protection pour les transducteurs d'ultrasons (9).

6. Dispositif selon une des revendications 1 à 5, **caractérisé en ce que** les couches superposées (3, 4, 5) sont formées de manière flexible.

7. Dispositif selon une des revendications 1 à 6, **caractérisé en ce que** les couches superposées (3, 4, 5) présentent une épaisseur maximale de 1/10 mm environ.

8. Dispositif selon une des revendications 1 à 7, **caractérisé en ce que** la couche métallique structurée (3) est formée par un procédé de sérigraphie.

9. Dispositif selon une des revendications 1 à 7, **caractérisé en ce que** la couche métallique structurée (3) est formée par un procédé de gravure chimique.

10. Dispositif selon une des revendications 1 à 9, **caractérisé en ce que** les couches superposées (3, 4, 5) sont fixées sur une partie extérieure (8, 10) d'un véhicule.

11. Dispositif selon une des revendications 1 à 10, **caractérisé en ce que** la première couche métallique (3) est fixée directement sur la partie extérieure (8, 10) du véhicule.

12. Dispositif selon une des revendications 1 à 11, **caractérisé en ce que** la partie du véhicule supportant les couches superposées (3, 4, 5) est un pare-chocs (8).

13. Dispositif selon une des revendications 1 à 11, **caractérisé en ce que** la partie supportant les couches superposées (3, 4, 5) est une baguette décorative (10) du véhicule.
